# EUROPEAN PATENT APPLICATION

(11) **EP 2 631 384 A1**
(43) Date of publication of application: **28.08.2013**
(21) Application number: 13155588.0
(22) Date of filing: 18.02.2013
(51) Int. Cl.: E04F 10/02, F16G 1/28

(54) **Movement assembly for folding awnings**

(30) Priority: 22.02.2012 IT BO20120083
(71) Applicant: Corradi S.P.A., 40128 Bologna (IT)
(72) Inventor: Rebonato, Armando, 40068 San Lazzaro die Savena BO (IT)
(74) Representative: Modiano, Micaela Nadia

(57) **Abstract**

A movement assembly (1) for folding awnings comprising a fixed structure provided with at least two longitudinal guiding beams (2) associated with respective sliders (3) that can slide along the beams; at least one cross-member for supporting and moving the covering canopy, which is coupled to at least one respective slider (3), being translatable along the beams (2) by means of the action of respective movement elements. Each guiding beam (2) comprises at least one first cavity (4), which is open outward, by means of a longitudinal slot (5), and whose shape and dimensions are substantially complementary to those of the main body (6) of the at least one slider (3), and is designed to accommodate the at least one slider (3). Each beam (2) furthermore comprises a compartment (7), which is connected to the first cavity (4) by means of a longitudinal slot (8), for the sliding accommodation of the active part (9a) of a belt (9) which is closed in a loop; a second closed cavity (10), which is proximate to the compartment (7), is designed for the sliding accommodation of the passive part (9b) of the belt (9) closed in a loop. The slider (3) comprises a coupling unit (11), for a portion of the active part (9a) of the belt (9), which is associated with the main body (6) by means of a connection band (12). The slot (8) has a width that is not smaller than the width of the connection band (12) but smaller than the width of the belt (9).

## Description

The present invention relates to a movement assembly for folding awnings.

Among covering tent structures, one type of structure that comprises an upper canopy that can be gathered along one edge of the structure itself when one does not wish to protect the subtended area from light or adverse weather is becoming considerably widespread.

The canopy, when it is completely extended, behaves like a shelter that is suitable for shading the underlying area and protecting it against rain, snow and other atmospheric agents.

In order to ensure sufficient stability and structural strength, the structure generally comprises a plurality of movable transverse elements (which are integral with the canopy); these elements are normally known as cross-members.

The movement of the canopy is normally achieved by means of at least one respective electric motor, which (generally) moves the front end cross-member between the two extreme configurations that correspond to the extended canopy and to the gathered canopy.

The electric motor (generally the gearmotor) designed to move the end cross-member is associated with it by means of a belt that is closed onto itself and to which a carriage coupled to the end cross-member is attached.

The belt is not visible from the outside because it slides within one of the profiles that constitute the upper beams of the structure.

In the case of large structures, i.e., structures in which the beams are very long (it is specified that structures can be provided in which the beams exceed 5 meters even by a large extent), the belt that lies inside the profile that constitutes the beam, due to its own weight, protrudes downward with respect to said beam (the belt will tend to arrange itself by way of example in the shape of a catenary).

This protruding arrangement, besides being aesthetically unpleasant, can cause malfunctions if material (such as branches, leaves and the like) carried by the wind becomes interposed between the belt and the respective internal seat of the profile that constitutes the beam.

It may also be dangerous, since a person might touch the protruding belt and if the motors for moving the canopy start at that moment said person might be injured by the belt.

Even in structures that are smaller but in which the beams are curved, the condition of protrusion of the belt may occur easily, with the same negative consequences.

Moreover, it is appropriate to specify that in structures with curved beams the movement of the belt within the respective internal accommodation slots can be hindered by the intense friction generated between the belt and the seat (the profile that constitutes the beam is constituted generally by an extruded aluminum element).

The aim of the present invention is to solve the problems described above, proposing a movement assembly for folding awnings in which the protrusion of the belt designed to move the covering canopy is prevented.

Within the scope of this aim, an object of the invention is to propose a movement assembly for folding awnings that is scarcely subject to malfunctions and failures caused by the interposition of material between the belt and its translation seat.

Another object of the invention is to propose a movement assembly for folding awnings that is scarcely subject to malfunctions and failures caused by friction of the belt in its translation seat.

Another object of the present invention is to provide a movement assembly for folding awnings that has low costs, is relatively simple to provide in practice and is safe in application.

This aim and these objects are achieved by a movement assembly for folding awnings of the type comprising a fixed structure provided with at least two longitudinal guiding beams associated with respective sliders which can slide along said beams, at least one cross-member for supporting and moving the covering canopy, which is coupled to at least one respective slider, being translatable along said beams by the action of respective movement elements, **characterized in that** each guiding beam comprises at least one first cavity, which is open outward, by means of a longitudinal slot, and whose shape and dimensions are substantially complementary to those of the main body of the at least one slider, said cavity being designed to accommodate the at least one slider, a compartment, which is connected to said first cavity by means of a longitudinal slot, for the sliding accommodation of the active part of a belt which is closed in a loop, a second closed cavity, which is proximate to said compartment, being designed for the sliding accommodation of the passive part of said belt closed in a loop, said slider comprising a coupling unit, for a portion of the active part of said belt, which is associated with said main body by means of an interconnection band, said slot having a width which is not smaller than the width of said interconnection band but smaller than the width of said belt.

Further characteristics and advantages of the invention will become more apparent from the description of a preferred but not exclusive embodiment of the movement assembly for folding awnings according to the invention, illustrated by way of non-limiting example in the accompanying drawings, wherein:

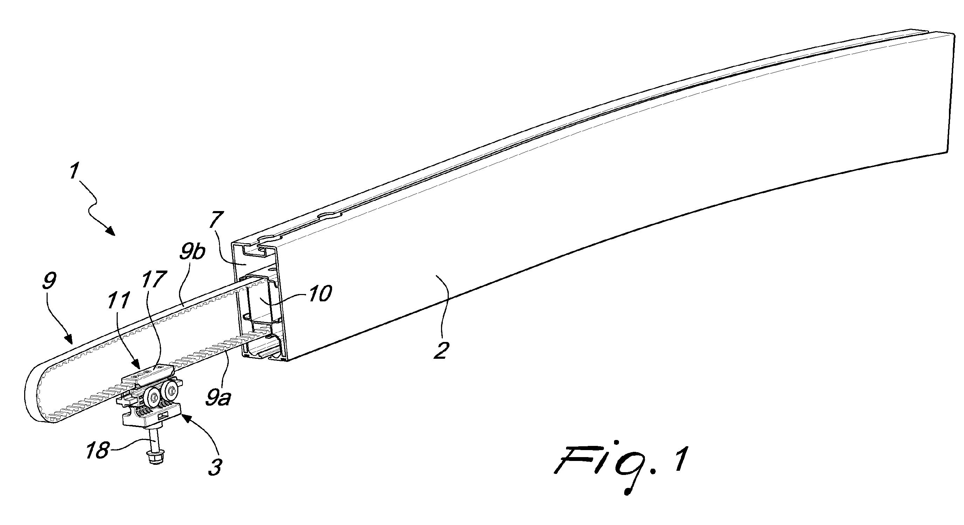

Figure 1 is a partially sectional perspective view of a movement assembly for folding awnings according to the invention;

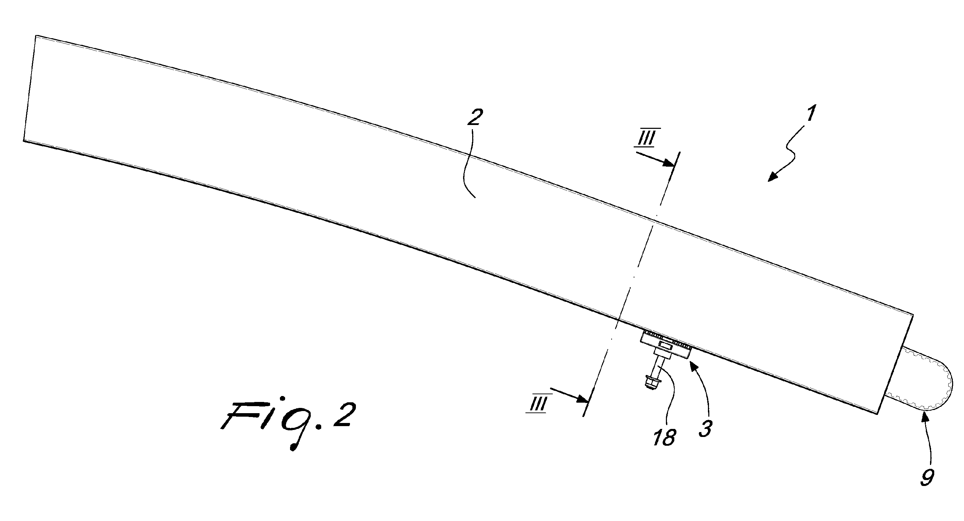

Figure 2 is a side view of the movement assembly of Figure 1;

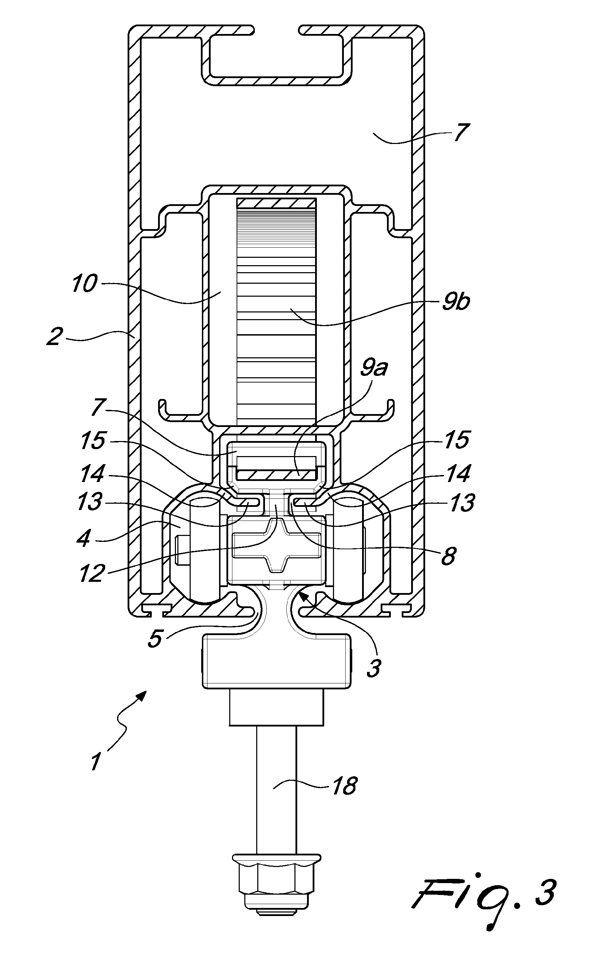

Figure 3 is a sectional view, along the plane III-III shown in Figure 2, of the movement assembly of Figure 1;

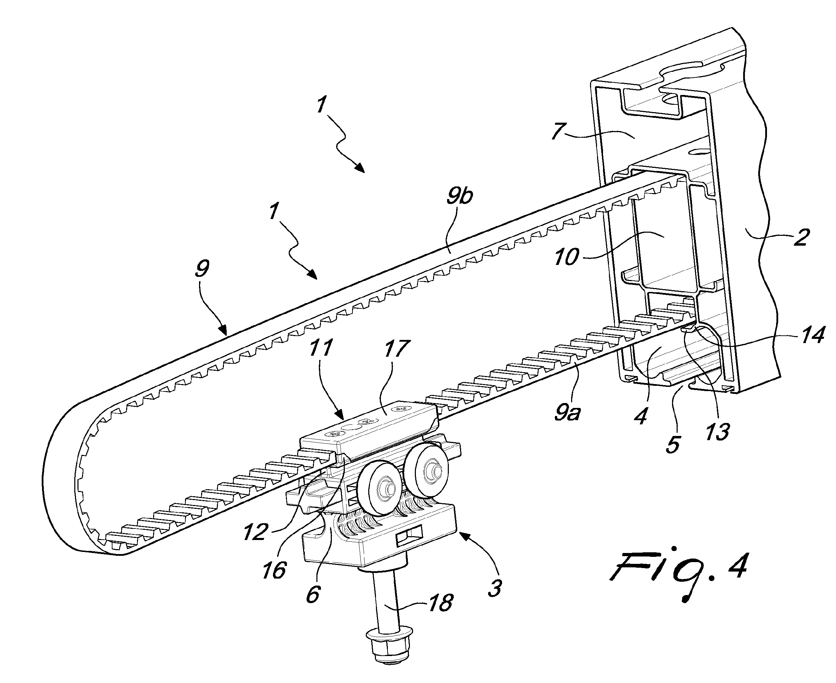

Figure 4 is an enlarged-scale view of a detail of the movement assembly of Figure 1.

With particular reference to the figures cited above, the numeral 1 generally designates a movement assembly for folding awnings.

Folding awnings for which the adoption of the assembly 1 according to the invention is particularly advantageous comprise a fixed structure that is provided with at least two longitudinal guiding beams 2 that are associated with respective sliders 3 that slide along them.

The folding awning furthermore comprises at least one cross-member for supporting and moving the covering canopy (not shown in the accompanying figures), which is coupled to at least one respective slider 3: each cross-member therefore will be able to translate along the beams 2 by means of the action of respective movement elements.

With particular reference to the assembly 1 according to the invention, it is specified that each guiding beam 2 comprises at least one first cavity 4 that is open outward by means of a longitudinal slot 5.

Said cavity 4 has a shape and dimensions that are substantially complementary to those of the main body 6 of the at least one slider 3: the cavity 4 has said shape and said dimensions because it is designed to accommodate slidingly the at least one slider 3.

Each beam comprises furthermore a compartment 7, which is connected to the first cavity 4 by means of a longitudinal slot 8 in order to accommodate slidingly the active part 9a of a belt 9 that is closed in a loop.

At the opposite ends, the belt 9 is guided appropriately by means of specific pulleys and actuated by means of a gearmotor or other equivalent device.

The beams 2 comprise furthermore a second closed cavity 10, which is proximate to the compartment 7 and is designed to accommodate slidingly the passive part 9b of the belt 9.

The slider 3 comprises a coupling unit 11 for a portion of the active part 9a of the belt 9; said unit is associated with the main body 6 by means of a connection band 12.

The slot 8 of the assembly 1 according to the invention is not narrower than the width of the connection band 12 but narrower than the width of the belt 9.

This size selection of the width of the slot 9 ensures that the band 12 can slide freely therein, being guided constantly by said slot 8, and at the same time it prevents the accidental escape of the belt 9 even if it is slack within the compartment 7.

In this manner, the assembly 1 allows optimum operation of the means for moving the canopy between the open configuration and the closed configuration, since the active part 9A of the belt 9, by not risking escape from the respective accommodation compartment 7, is always arranged in an optimum manner for pulling the respective slider 3 (the one associated with it).

Moreover, this construction choice avoids accidental escapes of the belt 9 also if the beams are very long and/or have curves, inflections and/or sudden direction variations: the belt 9 in fact is always guided and contained effectively within the respective compartment 7.

According to a constructive solution of unquestionable practical interest in practice and in application, the coupling unit 11 has a substantially rectangular cross-section.

In this case, the flaps 13 that constitute the bottom of the compartment 7 and delimit the slot 8 (i.e., the walls that constitute the lower side of the rectangle that substantially forms the cross-section of said compartment 7), are always mirror-symmetrical and mutually opposite for the sliding accommodation, between the respective ends, of the connection band 12.

More specifically, the compartment 7 with substantially rectangular cross-section has respective mutually opposite shaped portions 14 at the lower edges for connection between the flaps 13 and the contiguous walls of said compartment 7.

The opposite and converging inclination of said shaped portions 14 constitutes a resting element with automatic alignment for the bottom of the coupling unit 11 of the belt 9.

The bottom of the coupling unit 11 comprises respective bevels 15, even irregular and rounded ones, for abutment on the respective shaped portions 14 of the compartment 7.

The mutual abutment of inclined surfaces, the ones of the shaped portions 14 and the ones of the bevels 15, causes a self-alignment action due to the centering achieved as a consequence of the very weight of the slider 3. This construction characteristic contributes to optimum sliding of the slider 3 following the driving action provided by a movement of the active part 9a of the belt 9: the better the alignment of the band 12 with respect to the slot 9 and the alignment of the pivot 18 (to which the cross-members associated with the canopy of the awning will be connected) with respect to the slot 5, the better and frictionless the movement of the entire slider 3.

According to a constructive solution of unquestionable interest in application, the belt 9 can comprise an internal core made of polymeric material that has a high tensile strength and an outer covering made of a material of the self-lubricating type, with high lubricity.

As an alternative, the belt can be made of material of the self-lubricating type with high lubricity, which comprises on the inside any longitudinal reinforcement elements to increase tensile strength.

In any case it is specified that the material of the self-lubricating type will be selected preferably among polytetrafluoroethylene, polyamide and polymeric materials filled with additives such as graphite, glass beads and the like.

In particular, the possibility is mentioned of adopting a belt 9 made of materials such as polyamide, which comprises a covering of a substantially textile type (also, for example, made of polyamide) with high lubricity. This constructive solution for the belt 9 has optimum characteristics for use in an assembly 1 according to the invention.

The choice of a belt 9 with high surface lubricity ensures that even if the belt 9 has to slide on the internal surfaces of the compartment 7 (for example if the beams 2 are very long and the belt 9 is arranged like a catenary due to its own weight, or in the case of curved beams 2 provided with inflections, curves and/or angular portions) this will occur with extremely low friction values and therefore the motion will not be slowed and/or hindered in any manner.

The longitudinal guiding beams 2 can therefore have a shape that is selected among linear, curved and contoured without this causing any disadvantage in terms of operation, but also in aesthetic and technical terms.

Moreover, their length may also be higher than 6 meters without this causing drawbacks of any kind or, much less, the (unsightly) protrusion of the belt 9 from the bottom of the respective beam 2.

By adopting the assembly 1 defined according to this constructive solution, it is thus possible to provide folding awnings with extremely large dimensions (with beams 2 that can be potentially even tens of meters long), making said folding awnings suitable for application also in structures for covering stadiums, arenas, parks and in general large and very large spaces.

With particular reference to a constructive solution that is assured and practical in application, the coupling unit 11 comprises a resting block 16 for the belt and a covering dome 17 that is adapted for stable arrangement on the resting block 16, with clamping of the proposed belt 9.

In practice, in order to lock the belt 9 on the unit 11 it is therefore sufficient to arrange a portion thereof on the block 16 and close onto it the covering dome 17 so that said belt portion 9 is clamped between said components and therefore perfectly integral with the unit 11.

In order to ensure the stability of this clamping, it is possible to arrange screws that fasten the dome 17 on the block 16, forcefully clamping the portion of belt 9.

For smoother operation and for avoiding any slippages that might impair the correct arrangement of the canopy of the folding awning, it is specified that the belt 9 is preferably of the toothed type, at least one of the resting block 16 and the covering dome 17 in this case comprising a coupling surface that has a set of teeth complementary to the set of the belt 9 for the mutual engagement of the teeth of the belt 9 in the coupling surface and vice versa.

In this case, therefore, the meshing of the set of teeth of the belt 9 with the set of teeth of the coupling surface will ensure safe and precise movement of the slider 3.

Effectively, the present invention solves the problems described earlier, proposing a movement assembly 1 for folding awnings in which the protrusion of the belt 9 intended to move the covering canopy is avoided: this is achieved thanks to the particular shape of the slider 3, of the cavity 4, of the slot 5, of the compartment 7 and of the slot 8. These components, provided according to the teachings given above, provide assurance that the belt 9 is kept correctly in position even if it is slack (especially in the case of very long beams 2) or if the beams 2 are curved, shaped, provided with inflection points, elbows, angular portions and the like.

Advantageously, the movement assembly 1 for folding awnings is scarcely subject to malfunctions and failures due to the interposition of material between the belt 9 and its translation seat: this occurs because the belt 9 is kept in protected position (the active part 9a is comprised in the compartment 7 and the passive part 9b is comprised in the second cavity 10) during all the steps of its operation.

Positively, the movement assembly 1 for folding awnings is scarcely subject to malfunctions and failures caused by friction of the belt 9 in its translation seats (the compartment 7).

The invention thus conceived is susceptible of numerous modifications and variations, all of which are within the scope of the appended claims; all the details may furthermore be replaced with other technically equivalent elements.

In the examples of embodiment shown, individual characteristics, given in relation to specific examples, may actually be interchanged with other different characteristics that exist in other examples of embodiment.

In practice, the materials used, as well as the dimensions, may be any according to the requirements and the state of the art.

The disclosures in Italian Patent Application No. BO2012A000083 from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A movement assembly for folding awnings of the type comprising a fixed structure provided with at least two longitudinal guiding beams (2) associated with respective sliders (3) which can slide along said guiding beams, at least one cross-member for supporting and moving the covering canopy, which is coupled to at least one slider of said respective sliders (3), being translatable along said beams (2) by action of respective movement elements, **characterized in that** each of said guiding beams (2) comprises at least one first cavity (4), which is open outward, by means of a longitudinal slot (5), and whose shape and dimensions are substantially complementary to those of the main body (6) of the at least one slider (3), said cavity being designed to accommodate said at least one slider (3), a compartment (7), which is connected to said at least one first cavity (4) by means of a longitudinal slot (8), for the sliding accommodation of the active part (9a) of a belt (9) which is closed in a loop, a second closed cavity (10), which is proximate to said compartment (7), being designed for the sliding accommodation of the passive part (9b) of said belt (9) closed in a loop, said at least one slider (3) comprising a coupling unit (11), for a portion of the active part (9a) of said belt (9), which is associated with said main body (6) by means of a connection band (12), said slot (8) having a width which is not smaller than the width of said connection band (12) but smaller than the width of said belt (9).

2. The assembly according to claim 1, **characterized in that** said coupling unit (11) has a substantially rectangular cross-section, the flaps (13) that constitute the bottom of said compartment (7) and delimit said slot (8), forming the lower side of the rectangle that forms the substantially rectangular cross-section of said unit (11), being mirror-symmetrical and mutually opposite for the sliding accommodation, between the respective ends, of said connection band (12).

3. The unit according to claim 2, **characterized in that** said compartment (7) has a substantially rectangular cross-section with respective mutually opposite shaped portions (14) at the lower edges for connection between said flaps (13) and the contiguous walls of said compartment (7), the mutually opposite and converging inclination of said shaped portions (14) constituting a resting element with automatic alignment for the bottom of said coupling unit (11).

4. The assembly according to claim 3, **characterized in that** said coupling unit (11) has a bottom with lateral edges that comprise respective bevels (15), which can also be rounded and irregular, for abutment against the respective shaped portions (14) of the compartment (7).

5. The assembly according to claim 1, **characterized in that** said belt (9) comprises an internal core made of polymeric material which has a high tensile strength and an outer covering made of a material of the self-lubricating type with high lubricity.

6. The assembly according to claim 1 and as an alternative to claim 5, **characterized in that** said belt (9) is made of self-lubricating material with high lubricity which comprises on the inside optional longitudinal reinforcement elements for increasing tensile strength.

7. The assembly according to one of the claims 5 or 6, **characterized in that** said material of the self-lubricating type is preferably selected among polytetrafluoroethylene, polyamide and polymeric materials filled with additives such as graphite, glass beads, and the like.

8. The assembly according to one of the preceding claims, **characterized in that** said longitudinal guiding beams (2) have a shape which is selected among linear, curved, contoured and a length of even more than 6 meters.

9. The assembly according to one or more of the preceding claims, **characterized in that** said coupling unit (11) comprises a resting block (16) for said belt (9) and a covering dome (17) adapted for stable arrangement on said resting block (16) with clamping of the interposed belt (9).

10. The assembly according to claim 9, **characterized in that** said belt (9) is of the toothed type, at least one of said resting block (16) and said covering dome (17) comprising a coupling surface which has a set of teeth complementary to the set of teeth of said belt (9) for mutual engagement of the teeth of the belt (9) in the coupling surface and vice versa.
